# EUROPÄISCHE PATENTSCHRIFT

(11) **EP 0 788 632 B1**
(45) Veröffentlichungstag und Bekanntmachung des Hinweises auf die Patenterteilung: **09.09.1998**
(21) Anmeldenummer: 95944789.7
(22) Anmeldetag: 23.05.1995
(51) Int. Cl.: G06F 17/30

(54) **COMPUTERGESTÜTZTE UMWANDLUNG VON TABELLEN**
COMPUTERIZED CONVERSION OF TABLES
CONVERSION INFORMATISEE DE TABLEAUX

(30) Priorität: 26.10.1994 DE 4438120
(43) Veröffentlichungstag der Anmeldung: 13.08.1997
(73) Patentinhaber: International Business Machines Corporation, Armonk, N.Y. 10504 (US)
(72) Erfinder: SCHAWER, Wolfgang, D-71088 Holzgerlingen (DE)
(74) Vertreter: Teufel, Fritz, Dipl.-Phys.
(86) Internationale Anmeldenummer: EP9501965
(87) Internationale Veröffentlichungsnummer: WO9613782

(56) Entgegenhaltungen:
- US-A- 5 119 465

## Beschreibung

Die Erfindung betrifft die computergestützte Umwandlung einer Zusammenstellung von digitalen Daten eines ersten Datenformats in eine Zusammenstellung von digitalen Daten eines zweiten Datenformats, wobei die Daten des zweiten Datenformats in Tabellenform zusammengestellt und zur Bearbeitung durch ein Tabellenkalkulationsprogramm geeignet sind. Ein Verfahren gemäß dem Oberbegriff des Anspruchs 1 sowie ein Computersystem gemäß dem Oberbegriff des Anspruchs 8 sind durch US-A-5119465 bekannt.

Es sind Betriebsüberwachungsprogramme bekannt, mit deren Hilfe beispielsweise die Leistung eines Computersystems erfaßt und einem Benutzer angezeigt werden kann. Derartige Programme arbeiten eng mit dem Betriebssystem des Computersystems zusammen und erzeugen beispielsweise Daten hinsichtlich der Auslastung des Computersystems, der Zugriffs- bzw. Antwortzeiten des Computersystems, usw. Diese Daten liegen in einem ersten Datenformat vor, das von dem Betriebsüber-wachungsprogramm abhängig ist. Die Daten werden von dem Betriebsüberwachungsprogramm zu einem Bericht zusammen-gestellt, der durch das Einfügen von Leerzeichen und Zeilenvorschüben eine Tabellenform aufweist. Der Bericht kann dann dem Benutzer auf einem Bildschirm angezeigt und/oder in einem Speicher des Computersystems abgespeichert werden.

Des weiteren sind Tabellenkalkulationsprogramme bekannt, mit deren Hilfe beliebige Daten verarbeitet werden können. Die Daten müssen in einem zweiten Datenformat vorliegen, das von dem Tabellenkalkulationsprogramm abhängig ist. Die Daten können in Tabellenform in verschiedenen grafischen Weisen einem Benutzer auf einem Bildschirm angezeigt werden. Bestimmte Zeilen oder bestimmte Spalten oder auch bestimmte Werte der Tabelle können von dem Benutzer mit Hilfe von symbolischen Namen angesprochen werden. Ebenfalls ist es möglich, mit bestimmten Daten Berechnungen oder sonstige Verknüpfungen vorzunehmen und die Ergebnisse wiederum als Daten in die Tabellen zu integrieren. Schließlich können die Daten von Tabellenkalkulationsprogrammen häufig auch in andere Programme, beispielsweise in Textverarbeitungsprogramme übernommen werden.

War es nun in der Vergangenheit erwünscht oder erforderlich, Daten aus Berichten von Betriebsüberwachungsprogrammen mit Hilfe von Tabellenkalkulationsprogrammen weiterzuverarbeiten, so mußten die gewünschten Daten von einem Benutzer beispielsweise über die Tastatur des Computersystems in das Tabellenkalkulationsprogramm eingegeben werden. Die Tabellenform der Daten mußte dabei berücksichtigt werden. Die diesbezüglichen Nachteile sind offensichtlich.

Aufgabe der Erfindung ist es, die Umwandlung von Daten eines ersten Datenformats in Daten eines Tabellenkalkulationsprogramms zu automatisieren.

Gelöst wird diese Aufgabe dadurch, daß bei einem Verfahren der eingangs genannten Art einem oder mehreren der Daten des zweiten Datenformats automatisch ein symbolischer Name zugeordnet wird. Auf diese Weise schafft die Erfindung eine Verbindung zwischen dem Betriebsüberwachungsprogramm und dem Tabellenkalkulationsprogramm. Die Daten des ersten Datenformats, also des Betriebsüberwachungsprogramms, werden in Daten des zweiten Datenformats umgesetzt, also in Daten des Tabellenkalkulationsprogramms. Die Tabellenform der Daten bleibt dabei erhalten. Damit ist es möglich, daß die Daten des Betriebsüberwachungsprogramms von dem Tabellenkalkulations-programm weiterverarbeitet werden können. Darüber hinaus wird bestimmten, auf diese Weise erzeugten Daten des Tabellenkalkulationsprogramms ein symbolischer Name zugeordnet. Dies bedeutet, daß beispielsweise eine Spalte oder eine Zeile oder auch ein einzelnes Datum der durch die Zusammenstellung der Daten entstehenden Tabelle unter dem symbolischen Namen angesprochen werden können. Es ist somit nicht mehr erforderlich, daß ein Benutzer einzelne oder mehrere Daten in einer Tabelle umständlich über deren jeweilige Position in der Tabelle ansprechen muß, sondern es genügt, daß der Benutzer die Daten über den zugeordneten symbolischen Namen anspricht. Die Erfindung leistet somit nicht nur die Umwandlung von Daten des Betriebsüber-wachungsprogramms in Daten des Tabellenkalkulationsprogramms, sondern ermöglicht darüber hinaus über die Zuordnung der symbolischen Namen den Zugang zu einer einfachen und schnellen Verarbeitung der Daten in dem Tabellenkalkulationsprogramm.

Es ist einerseits möglich, daß das Computersystem bei der Umwandlung der Daten von dem ersten in das zweite Datenformat auf der Grundlage von vorgegebenen Kriterien bestimmten Spalten oder bestimmten Zeilen jeweils einen symbolischen Namen zuordnet. Die symbolischen Namen können dabei von dem Computersystem beliebig erzeugt oder in Abhängigkeit der jeweiligen Spalten bzw. Zeilen vergeben werden.

Andererseits ist es möglich, daß das Betriebsüberwachungsprogramm einen oder mehrere verschiedene Standardberichte erzeugen kann. Dies bedeutet, daß in dem Standardbericht bestimmte, teilweise unterschiedliche Daten in Tabellenform enthalten sind. Diese Daten und die genannte Tabellenform ist bei ein- und demselben Standardbericht immer gleich. Dadurch ist es möglich, daß vor der Durchführung von irgendwelchen Umwandlungen symbolische Namen auf der Grundlage derartiger Standardberichte erzeugt und in einer Strukturliste abgespeichert werden. Es werden also bestimmte Spalten oder Zeilen des jeweiligen Standardberichts mit bestimmten symbolischen Namen versehen. Verallgemeinert heißt dies, daß die Struktur bzw. der tabellarische Aufbau des Standardberichts umgesetzt wird in die einzelnen symbolischen Namen der Strukturliste. Steht nun ein derartiger Standardbericht zur Umwandlung von dem ersten Datenformat in das zweite Datenformat an, so können der bzw. die symbolischen Namen unmittelbar der Strukturliste entnommen und den zugehörigen Daten des zweiten Datenformats zugeordnet werden.

Besonders vorteilhaft ist es, wenn die Daten des zweiten Datenformats und/oder die symbolischen Namen derart erzeugt werden, daß sie von dem Tabellenkalkulationsprogramm Lotus 1-2-3 oder dazu kompatiblen anderen Tabellenkalkulationsprogrammen verarbeitet werden können. (Lotus 1-2-3 ist ein Warenzeichen der Lotus Development Corporation, USA).

Weitere vorteilhafte Ausgestaltungen der Erfindung ergeben sich aus der nachfolgenden Beschreibung von Ausführungsbeispielen, die anhand der Zeichnungen erläutert sind. Es zeigt:
- Fig. 1: eine schematische Darstellung des allgemeinen Aufbaus eines Standardberichts bei dem IBM Programm "Resource Measurement Facility", und
- Fig. 2: eine beispielhafte Darstellung eines bestimmten Standardberichts, bei dem einzelne Werte, Spalten oder Zeilen besonders hervorgehoben sind.

Mit Hilfe des IBM Programms "Resource Measurement Facility" (RMF) ist es möglich, beispielsweise die Leistung eines Computersystems zu erfassen. Zu diesem Zweck kann das RMF-Programm verschiedene Daten, die eine Beurteilung der Leistung des Computersystems ermöglichen, in Zusammenarbeit mit dem Betriebssystem des Computersystems ermitteln und zu einem Bericht zusammenstellen. Die Daten weisen in dem Bericht ein RMF-Datenformat auf, das von dem RMF-Programm vorgegeben ist. Die Daten können von dem RMF-Programm derart aufbereitet werden, daß sie eine Tabelle bilden. Zu diesem Zweck werden Leerzeichen und/oder Zeilenvorschübe zwischen die Daten eingeschoben, so daß die Daten einzelne Zeilen und Spalten bilden und damit tabellenförmig angeordnet sind. Des weiteren ist es möglich, daß die Daten in dem Bericht mit Überschriften versehen werden. Dies kann zeilenweise oder spaltenweise geschehen.

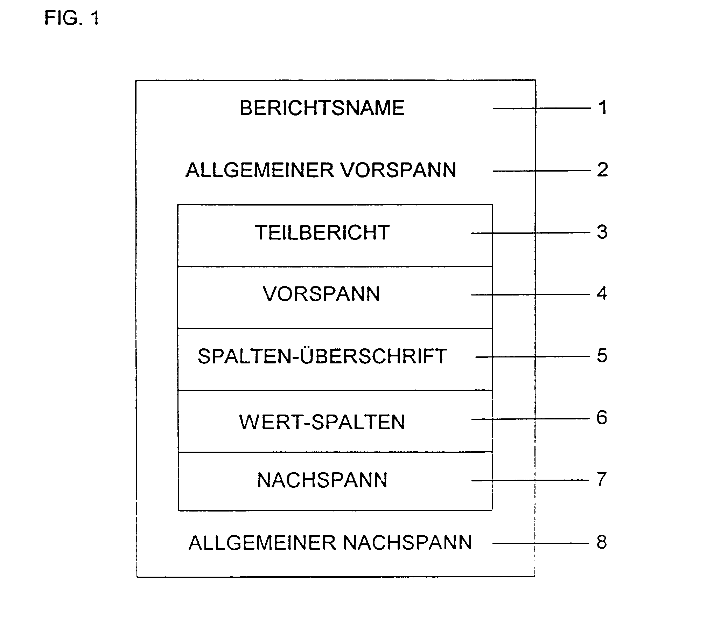

Das RMF-Programm stellt eine Anzahl vorgegebener Berichte zur Verfügung, in denen jeweils bestimmte Daten zusammengestellt sind. Derartige vorgegebene Zusammenstellungen von Daten werden auch als Standardberichte bezeichnet. Alle diese Standardberichte des RMF-Programms haben einen allgemeinen Aufbau, wie er in der Fig. 1 schematisch dargestellt ist.

Entsprechend der Fig. 1 steht am Anfang eines Standardberichts der Berichtsname 1, also die Bezeichnung des Berichts. Danach kommt ein allgemeiner Vorspann 2, der beispielsweise nähere Erläuterungen zu dem Bericht oder Kommentare zu dem Bericht enthält. Dabei ist es möglich, daß der Berichtsname 1 auch ein Bestandteil des allgemeinen Vorspanns 2 ist. Nach diesem allgemeinen Vorspann 2 folgt ein oder eine Mehrzahl von Teilberichten 3. In der Fig. 1 ist der Einfachheit halber nur ein Teilbericht 3 dargestellt. Es ist jedoch ersichtlich, daß mehrere solcher Teilberichte 3 aufeinanderfolgend in dem Standardbericht enthalten sein können.

Nach der Fig. 1 ist ein Teilbericht 3 zusammengesetzt aus einem Vorspann 4, aus Spaltenüberschriften 5, aus Wertespalten 6 und aus einem Nachspann 7. Der Vorspann 4 enthält, ähnlich dem allgemeinen Vorspann 2, nähere Erläuterungen oder Kommentare zu dem jeweils zugehörigen Teilbericht 3. Mit den Spaltenüberschriften 5 werden die Daten, die in den nachfolgenden Wertespalten 6 enthalten sind, näher bezeichnet. Dabei ist es möglich, daß die Spaltenüberschriften 5 hierarchisch ausgestaltet sind, daß also mehrere untergeordnete Spaltenüberschriften zu einer übergeordneten Spaltenüberschrift gehören, usw. Wie erwähnt, sind in den Wertespalten 6 die einzelnen Daten enthalten, beispielsweise die Daten über die Leistung des Computersystems. In einem Nachspann 7 können wiederum Erläuterungen oder Kommentare enthalten sein oder auch Zusammenfassungen oder Ergebnisse der jeweils zugehörigen Spalten.

Nach dem bzw. den Teilberichten 3 ist entsprechend der Fig. 1 ein allgemeiner Nachspann 8 vorgesehen, der, ähnlich dem Nachspann 7 bei Teilberichten 3, insbesondere Zusammenfassungen oder sonstige statistische Ergebnisse der darüberliegenden Spalten enthält.

Bei dem in der Fig. 1 dargestellten allgemeinen Aufbau eines Standardberichts ist es möglich, daß insbesondere der Vorspann 4 zu einem Teilbericht 3, aber auch der allgemeine Vorspann 2 und gegebenenfalls auch der Nachspann 7 zu einem Teilbericht 3 oder der allgemeine Nachspann 2 entfällt. Dies hängt von der jeweiligen Anwendung des Standardberichts ab und kann vom Benutzer entsprechend gewählt werden.

Auf der Grundlage des anhand der Fig. 1 dargestellten allgemeinen Aufbaus eines Standardberichts stellt das RMF-Programm, wie erwähnt, eine Mehrzahl vorgegebener Standardberichte einem Benutzer zur Verfügung. In diesen unterschiedlichen Standardberichten sind jeweils bestimmte Daten in unterschiedlicher Weise zusammengestellt. So ist es beispielsweise möglich, daß in einem ersten Standardbericht bestimmte Leistungsdaten halbstündlich erfaßt und über den Ablauf eines Tages zusammengestellt sind. In einem anderen Standardbericht ist es beispielsweise möglich, daß andere Leistungsdaten täglich erfaßt und über den Ablauf eines Monats zusammengestellt sind. Auf diese Weise stellen die verschiedenen Standardberichte Möglichkeiten dar, bestimmte Leistungsmerkmale des Computersystems hervorzuheben.

Jeder dieser Standardberichte weist eine bestimmte Tabellenform auf, in der die einzelnen Daten aufgelistet und einem Benutzer angezeigt werden. Diese Tabellenform enthält zusätzlich zu den Daten gegebenenfalls noch, entsprechend der Fig. 1, den Berichtsnamen 1, einen allgemeinen Vorspann 2, einen Vorspann 4 zu den jeweiligen Teilberichten 3, usw. Die Position der Daten wie auch der eben genannten Kommentierungen ist in dem jeweiligen Standardbericht eindeutig festgelegt und nicht veränderbar.

Auf der Grundlage dieser vorgegebenen Standardberichte werden Strukturlisten erzeugt und dem Benutzer des RMF-Programms zur Verfügung gestellt. Jedem Standardbericht ist eine Strukturliste zugeordnet und in dem Computersystem abgespeichert. Die Strukturliste stellt im wesentlichen ein Spiegelbild des Aufbaus des jeweils zugehörigen Standardberichts dar. Dies bedeutet, daß in der Strukturliste die einzelnen Zeilen und Spalten in entsprechender Weise vorhanden sind wie in dem Standardbericht. In der Strukturliste sind jedoch nicht die Daten oder die oben erläuterten sonstigen Kommentierungen enthalten, sondern eine Mehrzahl von symbolischen Namen. Wenn beispielsweise in einem Standardbericht eine vollständige Zeile für den Berichtsnamen 1 des Standardberichts vorgesehen ist, so ist in der zugehörigen Strukturliste der symbolische Name enthalten, unter dem der Berichtsname 1 von einem Benutzer angesprochen werden kann. Ist beispielsweise in einem Teilbericht 3 eines Standardberichts ein Teil einer Zeile für einen Nachspann 7 vorgesehen, so ist in der Strukturliste in dem entsprechenden Teil der Zeile der symbolische Name enthalten, unter dem der Benutzer den genannten Nachspann 7 ansprechen kann. In dieser Weise ist in der Strukturliste der symbolische Name der einzelnen Wertespalten 6, Spaltenüberschriften 5 usw. enthalten, mit deren Hilfe der Benutzer die jeweiligen Daten, usw. in dem Teilbericht 3 ansprechen kann.

Die in den Strukturlisten enthaltenen symbolischen Namen werden derart gewählt, daß sie den sogenannten "Range Names" des Lotus 1-2-3-Programms entsprechen und wie diese weiterverarbeitet werden können.

Ist von dem RMF-Programm ein Standardbericht erstellt und in dem Computersystem abgespeichert worden, so werden in einem ersten Schritt die einzelnen Daten des Standardberichts von dem Computersystem derart umgewandelt, daß sie von dem Tabellenkalkulationsprogramm Lotus 1-2-3 weiterverarbeitet werden können. Dies bedeutet, daß die in dem RMF-Format vorliegenden Daten des Standardberichts in ein Lotus 1-2-3-Format umgesetzt werden. In entsprechender Weise werden auch die Leerzeichen und/oder die Zeilenvorschübe, jeweils falls erforderlich, derart in ein Lotus 1-2-3-Format umgesetzt, daß die Tabellenform des Standardberichts unverändert erhalten bleibt.

In einem weiteren Schritt, der auch in dem vorgenannten ersten Schritt integriert sein kann, wird bestimmten Daten entsprechend der Strukturliste jeweils ein symbolischer Name zugeordnet. Wie erwähnt, entspricht dieser symbolische Name den "Range Names" des Lotus 1-2-3-Programms.

Insgesamt liegt nunmehr der Standardbericht im Lotus 1-2-3-Format vor und enthält des weiteren symbolische Namen, die von dem Lotus 1-2-3-Programm verarbeitet werden können. Der Standardbericht ist somit vollständig in eine Form umgewandelt, die von dem Tabellenkalkulationsprogramm Lotus 1-2-3 weiterverarbeitet werden kann. Der umgewandelte Standardbericht einschließlich des bzw. der symbolischen Namen ist in dem Computersystem abgespeichert.

Aufgrund der weiten Verbreitung des Tabellenkalkulationsprogramms Lotus 1-2-3 ist es möglich, daß Daten, die von dem Lotus 1-2-3-Programm verarbeitet werden können, auch von anderen Tabellenkalkulationsprogrammen weiterverarbeitet werden können. Auf diese Weise kann der Standardbericht nicht nur von dem Lotus 1-2-3-Programm, sondern auch mit Hilfe anderer Tabellenkalkulationsprogramme von einem Benutzer weiterverarbeitet werden.

Ebenfalls versteht es sich, daß die Daten aus dem RMF-Format nicht nur, wie erläutert, in das Lotus 1-2-3-Format umgewandelt werden können, sondern daß auch unmittelbar eine Umsetzung in Formate anderer Tabellenkalkulationsprogramme erfolgen kann. Dabei ist es möglich, daß die symbolischen Namen anderen Datenbereichsbezeichnungen oder dergleichen entsprechen.

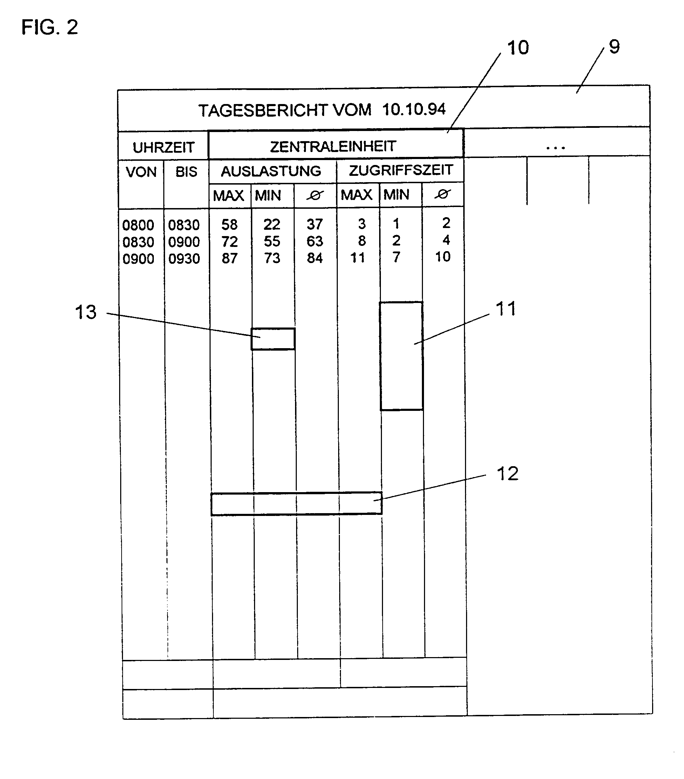

In der Fig. 2 ist beispielhaft als Standardbericht ein Tagesbericht dargestellt. In diesem Tagesbericht sind die maximale, die minimale und die durchschnittliche Auslastung sowie die entsprechenden Zugriffszeiten auf die Zentraleinheit eines Computersystem in halbstündlichen Zeiträumen angegeben. Die Daten sind von dem RMF-Programm erfaßt und danach aus dem RMF-Format in das Lotus 1-2-3-Format umgesetzt worden. Die Überschriften zu den einzelnen Spalten sind ebenfalls von dem RMF-Programm erstellt und in das Lotus 1-2-3-Format umgesetzt worden. Die Tabellenform des Tagesberichts der Fig. 2 ist in dem RMF-Format und in dem Lotus 1-2-3-Format identisch.

Die zu dem in der Fig. 2 dargestellten Standardbericht zugehörige Strukturliste weist im wesentlichen denselben Aufbau wie der gezeigte Tagesbericht auf. In dieser Strukturliste ist der ersten Zeile 9 des Tagesberichts beispielsweise der symbolische Name "Berichtsname" zugeordnet. Entsprechend ist für denjenigen Teil 10 der zweiten Zeile, in dem in dem Tagesbericht die Überschrift "Zentraleinheit" enthalten ist, in der Strukturliste der symbolische Name "Teilbericht 1" angegeben. Dabei ist es auch möglich, daß der symbolische Name mit der Überschrift identisch ist. Auf diese Weise ist jeder Überschrift in dem Tagesbericht der Fig. 2 ein symbolischer Name zugeordnet.

Des weiteren kann jeder Spalte oder jedem Teil 11 einer Spalte ebenfalls ein solcher symbolischer Name zugeordnet sein. Gleiches gilt ganz allgemein für jede Zeile oder jeden Teil 12 einer Zeile. Schließlich ist es auch möglich, daß ein einzelnes Datum 13 mit einem symbolischen Namen in der Strukturliste versehen ist.

Insgesamt liegt somit dem Benutzer der Standardbericht der Fig. 2 in einem Lotus 1-2-3-Format vor, zusammen mit einer Mehrzahl von symbolischen Namen, die, wie erläutert, den "Range Names" des Lotus 1-2-3-Programms entsprechen. Der Benutzer kann dadurch beispielsweise die Überschrift "Zentraleinheit" über den symbolischen Namen "Teilbericht 1" ansprechen und beispielsweise verändern. In gleicher Weise ist es möglich, daß der Benutzer über die jeweils zugehörigen symbolischen Namen einzelne oder mehrere Daten des Tagesberichts direkt anspricht und beispielsweise miteinander verknüpft. Die Ergebnisse können dann, wie dies bei Tabellenkalkulationsprogrammen allgemein die Möglichkeit ist, wiederum mit Hilfe der vorhandenen symbolischen Namen in den Standardbericht eingebracht werden.

## Patentansprüche

1. Verfahren zur Aufbereitung einer Zusammenstellung von digitalen Daten eines zweiten Datenformats mittels eines Computersystems, wobei die Zusammenstellung der digitalen Daten des zweiten Datenformats aus einer Zusammenstellung von digitalen Daten eines ersten Datenformats erzeugt und zur Bearbeitung durch ein Tabellenkalkulationsprogramm geeignet ist, gekennzeichnet durch den Schritt, daß einem oder mehreren der digitalen Daten des zweiten Datenformats automatisch ein symbolischer Name zugeordnet wird.

2. Verfahren nach Anspruch 1, bei dem für eine vorgegebene Zusammenstellung von Daten des ersten Datenformats der symbolische Name, der einem oder mehreren der Daten des zweiten Datenformats zugeordnet wird, aus einer Strukturliste entnommen wird.

3. Verfahren nach Anspruch 2, bei dem die vorgegebene Zusammenstellung von Daten des ersten Datenformats einem Standardbericht entspricht, und die Strukturliste eine Mehrzahl symbolischer Namen enthält, die in Abhängigkeit von dem Standardbericht erzeugt werden.

4. Verfahren nach Anspruch 2 oder Anspruch 3, bei dem die Strukturliste derart erzeugt wird, daß sie im wesentlichen die Struktur des Standardberichts widerspiegelt.

5. Verfahren nach einem der Ansprüche 1 bis 4, bei dem die Zusammenstellung von Daten des ersten Datenformats von einem Betriebsüberwachungsprogramm, beispielsweise einem Programm zur Erfassung der Leistung des Computersystems, erzeugt wird.

6. Verfahren nach einem der Ansprüche 1 bis 5, bei dem die Daten des zweiten Datenformats derart erzeugt werden, daß sie wie Daten des Tabellenkalkulationsprogramms Lotus 1-2-3™ verarbeitet werden können.

7. Verfahren nach einem der Ansprüche 1 bis 6, bei dem der oder die symbolischen Namen derart erzeugt werden, daß sie wie "Range Names" des Tabellenkalkulationsprogramms Lotus 1-2-3™ verarbeitet werden können.

8. Computersystem zur Aufbereitung einer Zusammenstellung von digitalen Daten eines zweiten Datenformats, wobei die Zusammenstellung der digitalen Daten des zweiten Datenformats aus einer Zusammenstellung von digitalen Daten eines ersten Datenformats erzeugt und zur Bearbeitung durch ein Tabellenkalkulationsprogramm geeignet ist, mit Speichermitteln, in denen die Zusammenstellung von Daten des ersten Datenformats abgespeichert ist oder abgespeichert war und in denen die Zusammenstellung von Daten des zweiten Datenformats abgespeichert ist, dadurch gekennzeichnet, daß in den Speichermitteln mindestens ein symbolischer Name abgespeichert ist, der einem oder mehreren der Daten des zweiten Datenformats automatisch zugeordnet wurde.

9. Computersystem nach Anspruch 8, bei dem eine Strukturliste mit einer Mehrzahl symbolischer Namen in den Speichermitteln abgespeichert ist.

## Claims

1. Method for preparing an assemblage of digital data of a second data format by means of a computer system, where the assemblage of digital data of the second data format is produced from an assemblage of digital data of a first data format and is suitable for processing by means of a spreadsheet program, characterised in that a symbolic name is automatically assigned to one or more of the digital data of the second data format.

2. Method in accordance with Claim 1, in which for a given assemblage of data of the first data format the symbolic name to be assigned to one or several of the data of the second data format are taken from a structure list.

3. Method in accordance with Claim 2, in which the given assemblage of data in the first data format corresponds to a standard report and the structure list contains a plurality of symbolic names which are produced as a function of the standard report.

4. Method in accordance with Claim 2 or Claim 3, in which the structure list is produced in such a way that it substantially reflects the structure of the standard report.

5. Method in accordance with one of the Claims 1 to 4, in which the assemblage of data in the first data format is produced by an activity monitoring program; for example, a program for recording the performance of the computer system.

6. Method in accordance with one of the Claims 1 to 5, in which the data of the second data format are produced in such a way that they can be processed like data of the spreadsheet program Lotus 1-2-3™.

7. Method in accordance with one of the Claims 1 to 6, in which the symbolic name or names is/are produced in such a way that it/they can be processed like the "Range names" of the spreadsheet program Lotus 1-2-3™.

8. Computer system for processing an assemblage of data of a second data format where the assemblage of digital data of the second data format is produced from data of a first data format and is suitable for processing by means of a spreadsheet program, with a storage device, in which the assemblage of data in the first data format is stored or was stored and in which the assemblage of data in the second data format is stored, characterised in that at least one symbolic name is stored in the storage device which was assigned automatically to one or more of the data of the second data format.

9. Computer system in accordance with Claim 8, in which a structure list with a plurality of symbolic names is stored in the storage device.

## Revendications

1. Procédé d'élaboration d'un ensemble de données numériques d'un deuxième format de données, au moyen d'un système d'ordinateur, l'ensemble des données numériques du deuxième format de données étant généré à partir d'un ensemble de données numériques venant d'un premier format de données et convenant pour être traité par un programme de calcul de tableau, caractérisé par l'étape consistant à associer un nom symbolique, automatiquement, à une ou plusieurs des données numériques du deuxième format de données.

2. Procédé selon la revendication 1, dans lequel pour un ensemble prédéterminé de données du premier format de données, le nom symbolique ayant été associé à une ou plusieurs des données du deuxième format de données est prélevé dans une liste de structure.

3. Procédé selon la revendication 2, dans lequel l'ensemble prédéterminé des données du premier format de données correspond à un rapport standard et la liste de structure contient une pluralité de noms symboliques générés en fonction du rapport standard.

4. Procédé selon la revendication 2 ou la revendication 3, dans lequel la liste de structure est générée de manière à refléter essentiellement la structure du rapport standard.

5. Procédé selon l'une des revendications 1 à 4, dans lequel l'ensemble des données du premier format de données est généré par un programme de surveillance de fonctionnement, par exemple un programme destiné à appréhender la puissance du système d'ordinateur.

6. Procédé selon l'une des revendications 1 à 5, dans lequel les données du deuxième format de données sont générées de manière à pouvoir être travaillées comme les données du programme de calcul de tableau Lotus-1-2-3™.

7. Procédé selon l'une des revendications 1 à 6, dans lequel le ou les noms symboliques sont générés de manière à pouvoir être travaillés tout comme les "Range Names" du programme de calcul de tableau Lotus-1-2-3™.

8. Système d'ordinateur conçu pour élaborer un ensemble de données numériques d'un deuxième format de données, l'ensemble des données numériques du deuxième format de données étant généré à partir d'un ensemble de données numériques d'un premier format de données, et convenant pour le travail au moyen d'un programme de calcul de tableau, comportant des moyens de mémoire, dans lesquels l'ensemble des données du premier format de données est mémorisé, ou était mémorisé, et dans lesquels l'ensemble des données du deuxième format de données est mémorisé, caractérisé en ce que dans les moyens de mémoire est stocké au moins un nom symbolique ayant été associé automatiquement à une ou plusieurs des données du deuxième format de données.

9. Système d'ordinateur selon la revendication 8, dans lequel une liste de structures présentant une pluralité de noms symboliques est stockée dans les moyens de mémoire.
